# EUROPEAN PATENT SPECIFICATION

(11) **EP 3 738 802 B1**
(45) Date of publication and mention of the grant of the patent: **11.09.2024**
(21) Application number: 19174073.7
(22) Date of filing: 13.05.2019
(51) Int. Cl.: B60H 1/00

(54) **AUTOMATIC TEMPERATURE ADJUSTMENT OF VEHICLE COMPARTMENT COMPONENTS**
AUTOMATISCHE TEMPERATURANPASSUNG VON FAHRZEUGINNENRAUMKOMPONENTEN
RÉGLAGE AUTOMATIQUE DE LA TEMPÉRATURE DE COMPOSANTS DE COMPARTIMENT DE VÉHICULE

(43) Date of publication of application: 18.11.2020
(73) Proprietor: Volvo Car Corporation, 40531 Göteborg (SE)
(72) Inventor: QVIST JESSEN, Per, DK-2300 Copenhagen (DK); KJÆR-LOHSE, Henrik, DK-3060 Espergærde (DK); KOODAL, Allan Kim, DK-2600 Glostrup (DK); FILSKOV, Sten, DK-2650 Hvidovre (DK)
(74) Representative: Kransell & Wennborg KB

(56) References cited:
- WO-A1-2017/137023
- WO-A1-2017/173222
- FR-A1- 3 040 658
- US-A1- 2009 000 778
- US-A1- 2011 172 880
- US-A1- 2016 016 454
- US-A1- 2019 070 930

## Description

### TECHNICAL FIELD

The present invention relates to a method for controlling the temperature of a vehicle compartment component.

### BACKGROUND

Modern vehicles offer a variety of advanced functions related to enhancing the driving experience and improved comfort. With the increasing number of functions there is also an increasing number of systems that may be controlled by the driver who consequently may be exposed to undesirable distractions. Thus, although the functions themselves each provides enhanced user experience the increasing number of functions may add stress to the driver attempting to control the large number of functions at the same time as controlling the vehicle.

The distractions and stress caused by the increasing demand for driver input may lead to hazardous situations and potentially to accidents. Nevertheless, users are often interested in including the advanced functions but there appears to be room for improving the user experience further. One system which may benefit from reduced user input is the climate system of the vehicle. If the driver could spend less attention on the climate system, more time could be used for paying attention to the surrounding traffic. WO2017/137023 discloses an example device for controlling the temperature of a vehicle seat.

There is thus a desire to improve the user experience provided by vehicle subsystems, but with reduced need for user input.

### SUMMARY

The invention relates to a method for controlling the temperature of a vehicle compartment component.

The invention is set out in the appended set of claims.

With the proposed method and implementations thereof, the vehicle component is heated or cooled once a user is detected, using power profiles that are adapted to fit the user's needs. The heating or cooling is only activated when it is needed, and the power profiles ensures that the temperature of the vehicle component is adjusted according to profiles that closely mimics a typical user's desired heating or cooling profile.

The inventors realized that drivers of vehicles want the temperature of vehicle compartment components to automatically fit their needs. In this way, the driver can focus on driving the vehicle and not on adjusting the temperatures of the vehicle compartment components.

The above advantages are obtained by insights in typical usage pattern in heating or cooling of vehicle interior components identified in studies. It was realized that most users initially desire heating or cooling the vehicle interior component according to a first power profile and subsequently, after a time duration, adjusts the heating to a second power profile.

Accordingly, with the herein proposed embodiments, the user does not have to spend time and attention on adjusting the heat of the vehicle interior component, the heating or cooling is automatically performed and in such a way that a user experiences a comfortable heat adjustment of the vehicle compartment component.

Further, with the proposed method and implementations thereof, the need for the driver to perform micro adjustments of the vehicle interior component heating or cooling is reduced, whereby the driver can instead focus on driving the vehicle.

The method is implemented by a control unit which controls a controllable power source configured to provide power to a temperature adjustment device adapted to adjust temperature of a vehicle compartment component. The control unit may operate on algorithms which can learn specific user preferences and adapt the heating profiles accordingly. In embodiments, the power profiles are based on user profiles determined from machine learning algorithms.

The inventors also propose a corresponding computer program product with the same advantages as the above-mentioned method.

Further features of, and advantages with, the present invention will become apparent when studying the appended claims and the following description.

### BRIEF DESCRIPTION OF DRAWINGS

These and other aspects of the present invention will now be described in more detail, with reference to the appended drawings showing example embodiments of the present invention, wherein:
FIG. 1 is a box diagram of a control unit connected to various devices according to embodiments of the present invention;
FIG. 2 is a flow-chart of method steps according to embodiments of the present invention,
FIG. 3 conceptually illustrates an example first and second power profile according to embodiments of the present invention;
FIG. 4 conceptually illustrates an example first and second power profile according to embodiments of the present invention;
FIG 5 conceptually illustrates a control unit configured to receive data for producing a user profile based on a machine learning algorithm; and
FIG. 6 illustrates a vehicle compartment including example vehicle compartment components.

### DETAILED DESCRIPTION

In the present detailed description, various embodiments of methods and implementations for controlling the temperature of a vehicle compartment component according to the present invention are described. However, this invention may be embodied in many different forms and should not be construed as limited to the embodiments set forth herein; rather, these embodiments are provided for thoroughness and completeness, and to fully convey the scope of the invention to the skilled person. In some instances, well known structures and devices are shown in block diagram form in order to avoid obscuring the novelty of the exemplary embodiments presented herein. Like reference characters refer to like elements throughout.

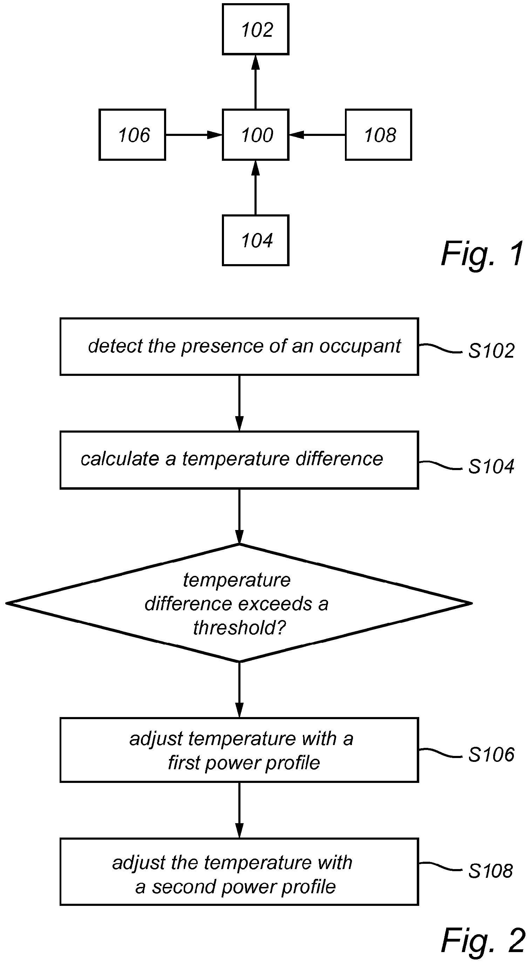

Fig. 1 illustrates a box diagram of a control unit 100 connected to a temperature adjustment device (102) adapted to adjust temperature of a vehicle compartment component. The control unit 100 is communicatively connected to a user detection device 104 adapted to detect a user. Further, the control unit 100 is communicatively connected to a climate system 106 of the vehicle so that the control unit may receive data indicative of the outside temperature of the vehicle, or at least data the indicative of the temperature difference between the outside temperature and a temperature threshold. The temperature adjustment device includes the necessary components such as a controllable power source controllable by the control unit 100. The power source is configured to provide the necessary power for adjusting the temperature of the vehicle compartment component.

The control unit 100 is configured to determine a temperature difference between an outside temperature of the vehicle surroundings and a temperature threshold. Furthermore, the control unit 100 is configured to, in response to receiving a signal indicative of the presence of a user in a vehicle seat, control the temperature adjustment device 102 to adjust the temperature of the vehicle compartment component with a first power profile. After a predetermined time duration of applying the first power profile, the control unit controls the temperature adjustment device 102, by sending control signals to the temperature adjustment device 102, to adjust the temperature of the vehicle compartment component with a second power profile which is different from the first power profile.

The inventors realized that the user experience in the vehicle may be enhanced by providing an automatic control for adjusting the temperature of some vehicle compartment components. This particularly relates to the surfaces of such vehicle interior components that the driver or user come in contact with and which may be experienced as more comfortable if heated or cooled, compared to an outside temperature. When a user is detected in e.g. the driver's seat of the vehicle, and the temperature difference between the outside surroundings and a threshold temperature is sufficiently large, then the control unit automatically initiates heating/cooling of the vehicle compartment component according to a first power profile. The first power profile is adapted to boost the temperature of the vehicle interior component in order to quickly provide a comfortable temperature for the user. After a predetermined time duration, a second power profile is activated which has the opposite gradient, i.e. to lower the temperature as compared to the first power profile in the case of heating the vehicle compartment component, or increasing the temperature compared to the first power profile in the case of cooling the vehicle compartment component. The second power profile is adapted to provide a more long-lasting comfortable temperature for the user after the initial boost provided by the first power profile.

The control unit 100 is connectable to a navigation system 108 of the vehicle. The control unit 100 receives a signal including a location indication from the navigation system 108. Based on this, the first power profile and the second power profile are selected based on the location indication. Advantageously, the first power profile and the second power profile may thereby be selected based on the climate at the location of the vehicle. For example, in particularly cold/hot climates the first power profile may provide a more aggressive boost in heating/cooling power. Some locations may also be related to certain activities for the driver which may trigger specific power profiles.

For example, some locations may be related to preferred activities for the user, such as sports or exercising activities. In such case, after exercise, the user may be warm when arriving at the vehicle, whereby the user may not want a too hot vehicle interior. In such case the control unit may adapt the first power profile and the second power profile accordingly.

The user detection device 104 may be embodied in various forms, such as weight sensors in the vehicle seat or cameras which may identify the user.

Fig. 2 is a flow-chart of method steps for controlling the temperature of a vehicle compartment component. The method comprises a step S102 of detecting the presence of an occupant in a vehicle seat. Step S104 includes calculating a temperature difference between an outside temperature of the vehicle surroundings and a vehicle compartment temperature. When the temperature difference exceeds a threshold, and in response to detecting the presence of the occupant, controlling S106 a temperature adjustment device to adjust the temperature of the vehicle compartment component with a first power profile. After a predetermined time duration of applying the first power profile, controlling S108 the temperature adjustment device to adjust the temperature of the vehicle compartment component with a second power profile which is different from the first power profile.

The power profiles may take various forms and may relate to either a heating operation or a cooling operation, i.e. the vehicle interior component may be either heated or cooled by applying the power profiles to the temperature adjustment device. However, regardless of a heating or a cooling operation power is needed for the specific operation.

An example use case is that a user enters the vehicle on a cold day. In order to quickly reach a comfortable temperature on a vehicle compartment component such as a vehicle seat, the first power profile may boost the applied power. In other words, as soon as the user is detected in the vehicle seat, the first power profile is applied to the temperature adjustment device to boost the temperature of the vehicle seat. The first power profile may be based on the detected temperature difference to more quickly reach a comfortable temperature. For example, the increase in the applied power with the first power profile may be set high if the detected temperature difference is large, i.e. exceeding a threshold.

After a time duration, the applied power to the temperature adjustment device is decreased according to the second power profile to decrease the temperature of the vehicle seat.

The second power profile may be adjustable based on a detected vehicle compartment temperature. In other words, if the vehicle compartment temperature is high, i.e. exceeding a threshold, the second power profile may be adjusted to reduce heating or increase cooling of the vehicle compartment component so that the user experiences a more comfortable temperature of the vehicle compartment component.

The power profiles may take different forms of which two example cases of first and second power profiles will now be described.

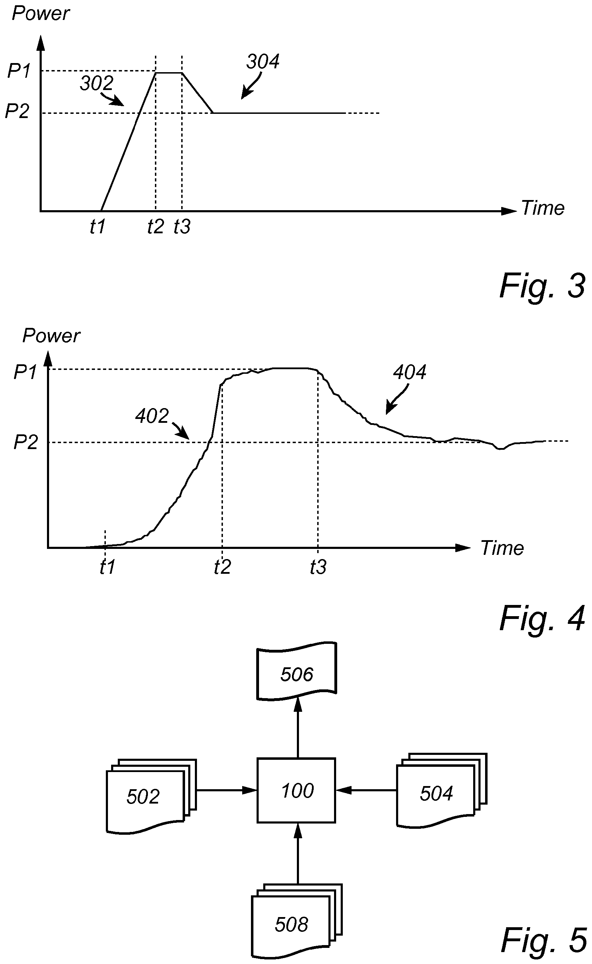

Fig. 3 illustrates a conceptual power versus time curve including a first power profile 302 and a second power profile 304. The first power profile includes a relatively steep increase in power from time t1 to time t2 to boost the applied power to quickly reach a comfortable temperature of the vehicle compartment component. The user may have been detected at time t1 or just before time 11. After a predetermined time duration, e.g. at time t3, the first power profile has been applied for a time duration from t1 to t3, the second power profile is applied. The second power profile includes an overall decrease in power level from the first power level P1 to the second power level P2. Further, the increase in power, i.e. from zero to P1 within the first power profile 302 is larger than the decrease in power, i.e. from P1 to P2, within the second power profile 304. The first power profile 302 and the second power profile 304 in fig. 3 are shown including constant increase and decrease of the applied power.

Fig. 4 illustrates another conceptual power versus time curve including a first power profile 402 and a second power profile 404. The first power profile 402 includes a relatively steep increase in power from time t1 to time t2 to boost the applied power to quickly reach a comfortable temperature of the vehicle compartment component. The user may have been detected at time t1 or just before time 11. The increase in power with the first power profile here follows a curved path until time t2 and subsequently a relatively constant or slightly rising path between time t2 and t3. The difference between the first power profile 302 shown in fig. 3 and the first power profile 402 shown in fig. 4 illustrates the adaptability of the first power profile. For example, the first power profile may be based on user profile that may either be selected by the user or be based on a machine learning algorithm taught on training data specific to the user.

The second power profile 404 is applied at time t3 and includes a general decrease in power from level P1 to power level P2. Note however, the second power profile is continuously applied after time t3.

As with the first power profile, also the second power profile may be based on user profile that may either be selected by the user or be based on a machine learning algorithm taught on training data specific to the user.

As is conceptually illustrated in figs. 4 and 5, the second power profile may be applied until e.g. the temperature adjustment device is turned off. The second power profile may be adjusted based on a detected vehicle compartment temperature. For example, if the vehicle compartment temperature is relatively high, then the applied power may be decreased for reducing the heat produced by the temperature adjusting device.

In embodiments, when the outside temperature is determined to be higher than the temperature threshold, controlling the temperature adjustment device to cool the vehicle compartment component with the first power profile. Thus, the temperature adjustment device may be controlled to cool the vehicle compartment component in some situations.

In other embodiments, when the outside temperature is below the temperature threshold, controlling the temperature adjustment device to heat the vehicle compartment component with the first power profile.

The temperature difference between the outside temperature and the temperature threshold may be considered an absolute value of the difference to determine whether the difference exceeds the threshold. However, as described above, different actions may be taken depending on the relationship between the outside temperature and the temperature threshold.

The temperature threshold may be determined based on the specific user profile. In other words, the temperature threshold may be part of the user profile and may be an output of the machine learning algorithm. Thus, the machine learning algorithm may have been taught a temperature threshold that fits the present user's usage patterns. Accordingly, the machine learning algorithms can learn specific user preferences.

Alternatively, a fixed temperature threshold of predetermined temperature differences may be applied - i.e. if the temperature inside the vehicle is >40 degrees Celsius then cooling is desired with the first power profile, or if the temperature difference between the interior of the vehicle and the outside exceeds a threshold X then cooling/heating may desired depending on the relationship between the temperatures inside and outside the vehicle, i.e. if the inside temperature is higher than the outside temperature then cooling may be desired, or, if the inside temperature is lower than the outside temperature then heating may be desired.

Fig. 5 conceptually illustrates a control unit 100 configured to receive user data 502 indicative of manual adjustment of the power applied to the temperature adjustment device. The control unit 100 is further configured to receive temperature data 504 indicative of the present outside temperature of the vehicle surroundings. The temperature data 504 may also include temperature data indicative of the present vehicle compartment temperature. The control unit 100 evaluates the user data 502 and the temperature data 504 using a machine learning algorithm in order to produce a user profile 506. The user profile 506 includes user preferences for the power profiles. Further, the control unit 100 receives location data 508 from a navigation system of the vehicle. The location data 508 provides the present location of the vehicle when manual adjustments of the power applied to the temperature adjustment device is performed. The locations may be related to certain activities which may be input to the control unit 100 by the user. Accordingly, in some embodiments the power profiles may be based on user profiles determined from machine learning algorithms. The machine learning algorithms are based on user interaction in both time and context. In this way the algorithm may learn the user preferences over time which further enhances the user experiences and reduces the need for the driver to manually control the heating/cooling which reduces potentially hazardous distractions.

The machine learning algorithms may be based on supervised learning or unsupervised learning.

The user profile 506 may also be at least partly based on temperature data and user data from a vast number of users in order to produce a generic user profile that may be adapted based on user specific user data and temperature data.

The present invention also relates to a vehicle compartment component associated with a user position in a vehicle seat. The vehicle compartment component comprises a temperature adjustment device adapted to adjust the temperature of the vehicle compartment component at variable power levels. The temperature adjustment device is controlled by a control unit configured to perform the steps of the claimed method.

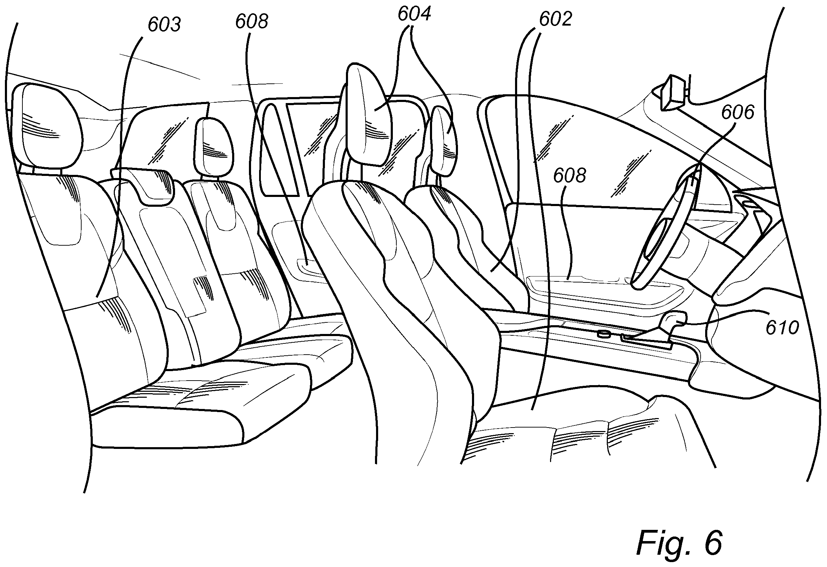

Fig. 6 illustrates a conceptual vehicle compartment including some exemplary vehicle compartment components. Exemplary vehicle compartment components include vehicle front seats 602, a back seat 603, head rests 604, a steering wheel 606, an arm rest 608, a gear lever 610. The herein exemplified vehicle compartment components are not exhaustive and there may exist further vehicle compartment components that are not explicitly mentioned herein.

Each of the vehicle compartment components includes a surface touchable by a user during vehicle operation. The temperature adjustment device is adapted to adjust a temperature of the vehicle compartment component surface.

The temperature adjustment device includes a heating element and/or a cooling element. By applying power to the temperature adjustment device, it either produces heat at the location of the temperature adjustment device to thereby heat a respective vehicle compartment component or withdraws heat from the vehicle compartment component. Example temperature adjustment devices may be air conditioning system, fans, seat heating devices, steering wheel heating devices, seat cooling fans, steering wheel cooling devices, arm rest cooling fans, arm rest heating devices.

The present invention also relates to a computer program product comprising a computer readable medium having stored thereon computer program means for controlling a temperature adjustment device to heat a vehicle compartment component according to any one of claims 10 to 11, wherein the computer program product comprises code for performing the steps according to any one of claims 1 to 8.

The communication between the control unit and the temperature adjustment device or navigation system, or other devices may be hardwired or may use other known electrical connection techniques, or wireless networks, such as known in the art such as via CAN-buses, Bluetooth, Wifi, 3G, 4G, 5G, etc.

A control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities.

A control unit of the present invention is generally known as an ECU, electronic control unit.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), complex programmable logic devices (CPLDs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described.

## Claims

1. A method for controlling the temperature of a vehicle compartment component (602, 603, 604, 606, 608, 610), the method comprising the steps of:
detecting (S102) the presence of an occupant in a vehicle seat;
calculating (S104) a temperature difference between an outside temperature of the vehicle surroundings and a temperature threshold,
receiving a location indication from a navigation system (108), wherein
when the temperature difference exceeds a threshold, and in response to detecting the presence of the occupant, controlling (S106) a temperature adjustment device (102) to adjust the temperature of the vehicle compartment component (602, 603, 604, 606, 608, 610) with a first power profile (302, 402) causing an increase in applied power level,
**characterized in that**:
after a predetermined time duration of applying the first power profile (302, 402), controlling (S108) the temperature adjustment device (102) to adjust the temperature of the vehicle compartment component (602, 603, 604, 606, 608, 610) with a second power profile (304, 404) which is different from the first power profile (302, 402), wherein the first power profile (302, 402) is an overall increase in applied power and the second power profile (304, 404) is an overall decrease in applied power level that is less than the increase in power level caused by the first power profile (302, 402) wherein at least one of the first power profile (302, 402) and the second power profile (304, 404) are selected or adapted based on the location indication.

2. The method according to claim 1, wherein, the increase in power within the first power profile (302, 402) is larger than the decrease in power within the second power profile (304, 404).

3. The method according to anyone of the preceding claims, wherein the first power profile (302, 402) is based on the detected temperature difference

4. The method according to any one of the preceding claims, comprising retrieving a user profile (506), wherein the first power profile (302, 402) and the second power profile (304, 404) are based on the user profile.

5. The method according to any one of the preceding claims, comprising retrieving a user activity indication of the user's activity preceding being detected in the vehicle seat, wherein the first power profile (302, 402) and the second power profile (304, 404) are based on the user activity indication.

6. The method according to any one of the preceding claims, wherein the second power profile (304, 404) is adjustable based on a detected vehicle compartment temperature

7. The method according to any one of the preceding claims, wherein the power profiles are based on user profiles determined from machine learning algorithms.

8. The method according to any one of the preceding claims, wherein when the outside temperature is determined to be higher than the temperature threshold, controlling the temperature adjustment device (102) to cool the vehicle compartment component (602, 603, 604, 606, 608, 610) with the first power profile, or
when the outside temperature is below the temperature threshold, controlling the temperature adjustment device (102) to heat the vehicle compartment component (602, 604, 606, 608, 610) with the first power profile (302, 402).

9. A control unit (100) connectable to a controllable power source configured to provide power to a temperature adjustment device (102) adapted to adjust temperature of a vehicle compartment component (602, 603, 604, 606, 608, 610), the control unit (100) is connectable to a navigation system (108) of the vehicle to receive a location indication from the navigation system (108), and the control unit (100) is configured to perform the steps according to any one of the preceding claims.

10. A vehicle compartment component (602, 603, 604, 606, 608, 610) 2. associated with a user position in a vehicle seat, comprising
a temperature adjustment device (102) adapted to adjust the temperature of the vehicle compartment component (602, 603, 604, 606, 608, 610) at variable power levels, wherein the temperature adjustment device (102) is controlled by a control unit configured to perform the steps according to any one of claims 1 to 8.

11. The vehicle compartment component (602, 603, 604, 606, 608, 610) according to claim 10, comprising a surface touchable by a user during vehicle operation, wherein the temperature adjustment device (102) is adapted to adjust a temperature of the vehicle compartment component surface.

12. A vehicle comprising the vehicle compartment component (602, 603, 604, 606, 608, 610) according to any one of claims 10 and 11.

13. A computer program product comprising a computer readable medium having stored thereon computer program means for controlling a temperature adjustment device (102) to heat a vehicle compartment component (602, 603, 604, 606, 608, 610) according to any one of claims 10 to 11, wherein the computer program product comprises code for performing the steps according to any one of claims 1 to 8.

## Patentansprüche

1. Verfahren zum Steuern der Temperatur einer Fahrzeuginnenraumkomponente (602, 603, 604, 606, 608, 610), wobei das Verfahren die folgenden Schritte umfasst:
Detektieren (S102) des Vorhandenseins eines Insassen auf einem Fahrzeugsitz;
Berechnen (S104) einer Temperaturdifferenz zwischen einer Außentemperatur der Fahrzeugumgebung und einem Temperaturschwellwert,
Empfangen einer Standortanzeige von einem Navigationssystem (108), wobei
wenn die Temperaturdifferenz einen Schwellwert überschreitet und in Reaktion auf das Detektieren des Vorhandenseins des Insassen, Steuern (S106) einer Temperatureinstellvorrichtung (102), um die Temperatur der Fahrzeuginnenraumkomponente (602, 603, 604, 606, 608, 610) mit einem ersten Leistungsprofil (302, 402) einzustellen, wodurch ein Anstieg eines angewandten Leistungsniveaus veranlasst wird,
**dadurch gekennzeichnet, dass**:
nach einer vorbestimmten Zeitdauer des Anwendens des ersten Leistungsprofils (302, 402) Steuern (S108) der Temperatureinstellvorrichtung (102), um die Temperatur der Fahrzeuginnenraumkomponente (602, 603, 604, 606, 608, 610) mit einem zweiten Leistungsprofil (304, 404) anzupassen, das sich vom ersten Leistungsprofil (302, 402) unterscheidet, wobei das erste Leistungsprofil (302, 402)
ein Gesamtanstieg der angewandten Leistung und das zweite Leistungsprofil (304, 404)
eine Gesamtabnahme eines angewandten Leistungsniveaus ist, die kleiner ist als der Anstieg des Leistungsniveaus, der vom ersten Leistungsprofil (302, 402) veranlasst wird, wobei mindestens eines des ersten Leistungsprofils (302, 402) und des zweiten Leistungsprofils (304, 404) auf Basis der Standortanzeige ausgewählt oder angepasst wird.

2. Verfahren nach Anspruch 1, wobei der Anstieg der Leistung im ersten Leistungsprofil (302, 402) größer ist als die Abnahme der Leistung im zweiten Leistungsprofil (304, 404).

3. Verfahren nach einem der vorhergehenden Ansprüche, wobei das erste Leistungsprofil (302, 402) auf der detektierten Temperaturdifferenz basiert.

4. Verfahren nach einem der vorhergehenden Ansprüche, das das Abrufen eines Benutzerprofils (506) umfasst, wobei das erste Leistungsprofil (302, 402) und das zweite Leistungsprofil (304, 404) auf dem Benutzerprofil basieren.

5. Verfahren nach einem der vorhergehenden Ansprüche, das das Abrufen einer Benutzeraktivitätsanzeige der vorhergehenden Aktivität des Benutzers umfasst, die auf dem Fahrzeugsitz detektiert wurde, wobei das erste Leistungsprofil (302, 402) und das zweite Leistungsprofil (304, 404) auf der Benutzeraktivitätsanzeige basieren.

6. Verfahren nach einem der vorhergehenden Ansprüche, wobei das zweite Leistungsprofil (304, 404) auf Basis einer Fahrzeuginnenraumtemperatur anpassbar ist.

7. Verfahren nach einem der vorhergehenden Ansprüche, wobei die Leistungsprofile auf Benutzerprofilen basieren, die anhand von Maschinenlernalgorithmen bestimmt werden.

8. Verfahren nach einem der vorhergehenden Ansprüche, wobei, wenn bestimmt wird, dass die Außentemperatur höher ist als der Temperaturschwellwert, Steuern der Temperatureinstellvorrichtung (102) zum Kühlen der Fahrzeuginnenraumkomponente (602, 603, 604, 606, 608, 610) mit dem ersten Leistungsprofil oder
wenn die Außentemperatur unter dem Temperaturschwellwert liegt, Steuern der Temperatureinstellvorrichtung (102) zum Erwärmen der Fahrzeuginnenraumkomponente (602, 604, 606, 608, 610) mit dem ersten Leistungsprofil (302, 402).

9. Steuereinheit (100), die mit einer steuerbaren Leistungsquelle verbindbar und dazu ausgelegt ist, einer Temperatureinstellvorrichtung (102) eine Leistung bereitzustellen, die angepasst ist, eine Temperatur einer Fahrzeuginnenraumkomponente (602, 603, 604, 606, 608, 610) einzustellen, wobei die Steuereinheit (100) mit einem Navigationssystem (108) des Fahrzeugs verbindbar ist, um eine Standortanzeige vom Navigationssystem (108) zu empfangen, und die Steuereinheit (100) dazu ausgelegt ist, die Schritte nach einem der vorhergehenden Ansprüche durchzuführen.

10. Fahrzeuginnenraumkomponente (602, 603, 604, 606, 608, 610), die mit einer Benutzerposition auf einem Fahrzeugsitz verknüpft ist und Folgendes umfasst eine Temperatureinstellvorrichtung (102), die angepasst ist, die Temperatur der Fahrzeuginnenraumkomponente (602, 603, 604, 606, 608, 610) mit verschiedenen Leistungsniveaus einzustellen, wobei die Temperatureinstellvorrichtung (102) von einer Steuereinheit gesteuert wird, die dazu ausgelegt ist, die Schritte nach einem der Ansprüche 1 bis 8 durchzuführen.

11. Fahrzeuginnenraumkomponente (602, 603, 604, 606, 608, 610) nach Anspruch 10, die eine Fläche umfasst, die von einem Benutzer während eines Fahrzeugbetriebs berührbar ist, wobei die Temperatureinstellvorrichtung (102) angepasst ist, eine Temperatur der Fläche der Fahrzeuginnenraumkomponente einzustellen.

12. Fahrzeug, das die Fahrzeuginnenraumkomponente (602, 603, 604, 606, 608, 610) nach einem der Ansprüche 10 und 11 umfasst.

13. Computerprogrammprodukt, das ein computerlesbares Medium umfasst, auf dem Computerprogrammmittel zum Steuern der Temperatureinstellvorrichtung (102) zum Erwärmen einer Fahrzeuginnenraumkomponente (602, 603, 604, 606, 608, 610) nach einem der Ansprüche 10 bis 11 gespeichert sind, wobei das Computerprogrammprodukt Code zum Durchführen der Schritte nach einem der Ansprüche 1 bis 8 umfasst.

## Revendications

1. Procédé de commande de la température d'un composant de compartiment de véhicule (602, 603, 604, 606, 608, 610), le procédé comprenant les étapes consistant à :
détecter (S102) la présence d'un occupant sur un siège de véhicule ;
calculer (S104) une différence de température entre une température extérieure de l'environnement du véhicule et un seuil de température ;
recevoir une indication de localisation en provenance d'un système de navigation (108),
lorsque la différence de température dépasse un seuil et en réponse à la détection de la présence de l'occupant, commander (S106) un dispositif de réglage de température (102) pour régler la température du composant de compartiment de véhicule (602, 603, 604, 606, 608, 610) avec un premier profil de puissance (302, 402) provoquant une augmentation d'un niveau de puissance appliqué,
**caractérisé en ce que** :
après une durée prédéterminée d'application du premier profil de puissance (302, 402), commander (S108) le dispositif de réglage de température (102) pour régler la température du composant de compartiment de véhicule (602, 603, 604, 606, 608, 610) avec un second profil de puissance (304, 404) qui est différent du premier profil de puissance (302, 402),
le premier profil de puissance (302, 402) étant une augmentation globale de la puissance appliquée et le second profil de puissance (304, 404) étant une diminution globale du niveau de puissance appliqué qui est inférieure à l'augmentation du niveau de puissance provoquée par le premier profil de puissance (302, 402), le premier profil de puissance (302, 402) et/ou le second profil de puissance (304, 404) étant sélectionnés ou adaptés sur la base de l'indication de localisation.

2. Procédé selon la revendication 1, dans lequel l'augmentation de puissance dans le premier profil de puissance (302, 402) est plus importante que la diminution de puissance dans le second profil de puissance (304, 404).

3. Procédé selon l'une quelconque des revendications précédentes, dans lequel le premier profil de puissance (302, 402) est basé sur la différence de température détectée.

4. Procédé selon l'une quelconque des revendications précédentes, comprenant l'étape consistant à récupérer un profil d'utilisateur (506), le premier profil de puissance (302, 402) et le second profil de puissance (304, 404) étant basés sur le profil d'utilisateur.

5. Procédé selon l'une quelconque des revendications précédentes, comprenant l'étape consistant à récupérer une indication d'activité d'utilisateur de l'activité de l'utilisateur avant sa détection sur le siège de véhicule, le premier profil de puissance (302, 402) et le second profil de puissance (304, 404) étant basés sur l'indication d'activité d'utilisateur.

6. Procédé selon l'une quelconque des revendications précédentes, dans lequel le second profil de puissance (304, 404) est réglable sur la base d'une température de compartiment de véhicule détectée.

7. Procédé selon l'une quelconque des revendications précédentes, dans lequel les profils de puissance sont basés sur des profils d'utilisateur déterminés à partir d'algorithmes d'apprentissage automatique.

8. Procédé selon l'une quelconque des revendications précédentes, dans lequel, lorsqu'il est déterminé que la température extérieure est supérieure au seuil de température, commander le dispositif de réglage de température (102) pour refroidir le composant de compartiment de véhicule (602, 603, 604, 606, 608, 610) avec le premier profil de puissance, ou
lorsque la température extérieure est inférieure au seuil de température, commander le dispositif de réglage de température (102) pour chauffer le composant de compartiment de véhicule (602, 604, 606, 608, 610) avec le premier profil de puissance (302, 402).

9. Unité de commande (100) pouvant être connectée à une source de puissance pouvant être commandée qui est configurée pour alimenter un dispositif de réglage de température (102) conçu pour régler la température d'un composant de compartiment de véhicule (602, 603, 604, 606, 608, 610), l'unité de commande (100) pouvant être connectée à un système de navigation (108) du véhicule pour recevoir une indication de localisation en provenance du système de navigation (108), et l'unité de commande (100) étant configurée pour réaliser les étapes selon l'une quelconque des revendications précédentes.

10. Composant de compartiment de véhicule (602, 603, 604, 606, 608, 610) associé à une position d'utilisateur sur un siège de véhicule, comprenant :
un dispositif de réglage de température (102) conçu pour régler la température du composant de compartiment de véhicule (602, 603, 604, 606, 608, 610) à des niveaux de puissance variables, le dispositif de réglage de température (102) étant commandé par une unité de commande configurée pour réaliser les étapes selon l'une quelconque des revendications 1 à 8.

11. Composant de compartiment de véhicule (602, 603, 604, 606, 608, 610) selon la revendication 10, comprenant une surface pouvant être touchée par un utilisateur pendant le fonctionnement du véhicule, le dispositif de réglage de température (102) étant conçu pour régler une température de la surface du composant de compartiment de véhicule.

12. Véhicule comprenant le composant de compartiment de véhicule (602, 603, 604, 606, 608, 610) selon l'une quelconque des revendications 10 et 11.

13. Produit-programme informatique, comprenant un support lisible par ordinateur sur lequel est stocké un moyen de programme informatique pour commander un dispositif de réglage de température (102) afin de chauffer un composant de compartiment de véhicule (602, 603, 604, 606, 608, 610) selon l'une quelconque des revendications 10 et 11, le produit-programme informatique comprenant un code pour réaliser les étapes selon l'une quelconque des revendications 1 à 8.
